# EUROPEAN PATENT APPLICATION

(11) **EP 2 703 849 A1**
(43) Date of publication of application: **05.03.2014**
(21) Application number: 13180838.8
(22) Date of filing: 19.08.2013
(51) Int. Cl.: G01V 5/00

(54) **Back-scatter human body security inspection system and scanning method thereof to detect radioactive matter**

(30) Priority: 21.08.2012 CN 201210299638
(71) Applicant: Nuctech Company Limited, TongFang Building Shuangqinglu Haidian District Beijing 100084 (CN)
(72) Inventor: Zhao, Ziran, Beijing (CN); Wu, Wanlong, 100084 Beijing (CN); Jin, Yingkang, 100084 Beijing (CN); Tang, Le, 100084 Beijing (CN); Zhu, Chenguang, 100084 Beijing (CN); Ding, Guangwei, 100084 Beijing (CN); Cao, Shuo, 100084 Beijing (CN)
(74) Representative: Elzaburu Marquez, Alberto

(57) **Abstract**

The present invention discloses a back-scatter human body security inspection system, capable of detecting a radioactive matter carried by the human body (4), comprising: a radiation source (1) configured to generate radiation rays, a flying spot forming device (2) configured to modulate the radiation rays from the radiation source, so as to form flying spot scanning beams for scanning the human body to be detected, a detector (3) configured to detect radiation rays from the human body to be detected and output a signal characterizing a dose of the radiation rays, a control and data processing device (5) configured to process the signal outputted from the detector to obtain a radiation image of the human body to be detected. The detector detects the radiation rays from the radiation source scattered by the human body to be detected, separately at different times, and the radiation rays from the radioactive matter carried by the human body to be detected. In the present invention, the application ranges of the back-scatter human body scanning apparatus can be effectively expanded, without adding and modifying the hardware therein, thereby increasing the monitoring function to the radioactive matter carried by the human body and further improving the effects of the human body security inspection.

## Description

### CROSS-REFERENCE TO RELATED APPLICATION

This application claims the benefit of Chinese Patent Application No. 201210299638.0 filed on August 21, 2012 in the State Intellectual Property Office of China, the disclosure of which is incorporated herein by reference.

### BACKGROUND OF THE INVENTION

### 1. Field of the Invention

The present invention relates to a human body security inspection system, and more particularly, to a back-scatter human body security inspection system and a scanning method thereof to detect radioactive matter carried by the human body.

### 2. Description of the Related Art

Back-scatter imaging technique is one of major techniques for human body inspection. In the back-scatter imaging, the human body is scanned by X-ray beam while scattering signals scattered from the scanned human body are received by a detector having a large area. During the subsequent data processing step, the scanning positions are correlated to the scattering signals one by one, and thereby obtaining the scattering image about the human body.

In addition to dangerous goods such as fire gun, cutting tool and explosives, a radioactive source can also be one of dangerous goods carried by the human body. However, current human body inspection apparatuses, including back-scatter and millimetre wave inspection apparatuses, cannot achieve detection and alarm functions to the radioactive source, which is a shortcoming for human body inspection.

Accordingly, it is desirable to detect the radioactive source carried by the human body using the detector with a large area in the back-scatter human body security inspection apparatus under support of the suitable inspection procedures and algorithms, in order to further improve effects of the human body security inspection.

### SUMMARY OF THE INVENTION

In view of the above shortages in prior arts, an object of the present invention is to alleviate at least one aspect of the above problems and defects.

Accordingly, one object of the present invention is to provide a back-scatter human body security inspection system which can detect radioactive source carried by the human body.

In accordance with one aspect of the present invention, a back-scatter human body security inspection system is provided, which is capable of detecting a radioactive matter carried by the human body, the back-scatter human body security inspection system comprising:
a radiation source configured to generate radiation rays;
a flying spot forming device, configured to modulate the radiation rays from the radiation source, so as to form flying spot scanning beams for scanning the human body to be detected;
a detector configured to detect radiation rays from the human body to be detected and output a signal characterizing a dose of the radiation rays;
a control and data processing device, configured to process the signal outputted from the detector to obtain a radiation image of the human body to be detected,
wherein the detector detects the radiation rays from the radiation source scattered by the human body to be detected, and the radiation rays from the radioactive matter carried by the human body to be detected, separately at different times.

Specifically, the back-scatter human body security inspection system further comprises a displaying device configured to display the obtained radiation image of the human body to be detected.

In the above technical solutions, the flying spot forming device comprises:
a fixed shield plate and a rotatable shield body disposed between the radiation source and a object to be scanned respectively, wherein the fixed shield plate is stationary with respect to the radiation source and the rotatable shield body is rotatable with respect to the fixed shield plate, wherein:
   the fixed shield plate is provided with a ray passing-through region thereon, which allows a ray beam from the radiation source to pass through the fixed shield plate,
   a ray incidence region and a ray emergence region, arranged on the rotatable shield body respectively, during the rotation scanning of the rotatable shield body, the ray passing-through region of the fixed shield plate continuously intersects with the ray incidence region and the ray emergence region of the rotatable shield body to generate collimating holes for scanning.

Further, the ray passing-through region of the fixed shield plate is a rectilinear gap, the rotatable shield body is a cylinder, and the ray incidence and emergence regions are configured to be a series of discrete pinholes or slits disposed along a spiral line respectively.

Alternatively, the detector as a whole detects the rays scattered back from a surface of the scanned human body, and produces an electrical signal, which is sent into the control and data processing device by a single transmission circuit and processed therein.

Alternatively, the detector comprises a plurality of detecting units, which detect the rays scattered back from a surface of the scanned human body respectively, and produce electrical signals, which are sent into the control and data processing device by respective transmission circuits and processed therein.

More specifically, the radiation source is a X-ray machine, a γ ray source or an isotope ray source; and the detector is a plastic scintillator detector or an inorganic scintillator detector.

In accordance with another aspect of the present invention, a scanning method by a back-scatter human body security inspection system is provided, the method includes:
(a) driving a radiation source to emit radiation ray beams;
(b) modulating the ray beams from the radiation source by a flying spot forming device to form the flying spot ray beams being incident on the scanned human body;
(c) detecting the radiation rays scattered back from the human body to be detected by the detector, producing an electrical signal, inputting it into the control and data processing device and processing it, for obtaining a radiation image of the back-scatter;
(d) detecting the radiation rays from the radioactive matter carried by the human body to be detected by the detector, producing an electrical signal, inputting it into the control and data processing device, and processing it, for obtaining a radiation image of the radioactive matter,
wherein the step (c) and the step (d) are performed separately at different times.

Specifically, the step (d) comprises:
when the radiation source does not emit the radiation rays and the human body to be detected is absent in front of the inspection system, the detector is placed in a working state to make ray detection, the control and data processing device processes the data, and extracts a characteristic value with a predetermined algorithm, as a characteristic value of an environment background;
when the radiation source does not emit the radiation rays and the human body to be detected is in front of the inspection system, the detector is arranged in the same working state as the state in which the characteristic value of the environment background is measured, to perform ray detection, the control and data processing device processes data and extracts a characteristic value, as a characteristic value of the human body to be detected;
comparing the characteristic value of the human body to be detected with the characteristic value of the environment background, and if the characteristic value of the human body to be detected reaches a certain threshold above the characteristic value of the environment background, then it will be determined that there is a suspicion that the human body carries the radioactive matter.

Specifically, said characteristic values of the human body to be detected and the background of the environment are preferably an average value on a signal level within a certain time, the number of pulses exceeding a certain level value within a certain time, a statistic parameter of the average value and the number of pulses, or various combinations of the values and the statistic parameter.

In the comparing step, it further comprises:
drawing a conclusion on whether the human body to be detected carries the radioactive matter by a direct comparison; or
drawing a conclusion on probability that the human body to be detected carries the radioactive matter by a comprehensive comparison on various characteristic values.

In another specific embodiment, the detector comprises a plurality of detecting units, which detect the rays scattered back from a surface of the scanned human body respectively, and produce electrical signals, which are sent into the control and data processing device by the respective transmission circuits and processed therein. The method further comprises determining whether various areas of the human body to be detected have the radioactive matter or the probability that various areas of the human body to be detected have the radioactive matter, based on the outputted values detected by the detecting units.

In one preferable embodiment, after the starting up of the inspection system, the operation of measuring the characteristic value of the environment background is performed within a duration in which no objects are scanned.

In one preferable embodiment, the operation of measuring the characteristic value of the human body to be detected is performed within a readiness period in which the human body to be detected is preparing for detection in front of the inspection system, or a period in which the human body to be detected turns out in front of the apparatus.

The above non-specific embodiments of the present invention at least have at least one or more aspects of the advantages and effects:

In accordance with one aspect of the present invention, the application arranges of the back-scatter human body scanning apparatus can be effectively expanded, without increasing and modifying the hardware therein, thereby increasing the monitoring function to the radioactive matter carried by the human body and further improving the effects of the human body security inspection.

### BRIEF DESCRIPTION OF THE DRAWINGS

Figure 1 is a schematic view showing a typical back-scatter human body scanning system in accordance with one embodiment of the present invention;
Figure 2 is a schematic view showing a back-scatter human body security inspection system which may detect a radioactive matter carried by human body using a plurality of detectors in accordance with another embodiment of the present invention;
Figure 3 is an exploded schematic view showing a ray generator 1 and a flying spot forming device 2 in accordance with one embodiment of the present invention;
Figure 4 is a sectional view showing working principles of the ray generator 1 and the flying spots forming device 2 shown in figure 3; and
Figure 5 is a schematic view showing workflow of the back-scatter human body security inspection system in accordance with one embodiment of the present invention, wherein figure 5A is a workflow chart of the back-scatter human body security inspection system without detecting the radioactive matter; and figure 5B is a workflow chart of the back-scatter human body security inspection system upon detecting the radioactive matter.

### DETAILED DESCRIPTION OF THE EMBODIMENTS

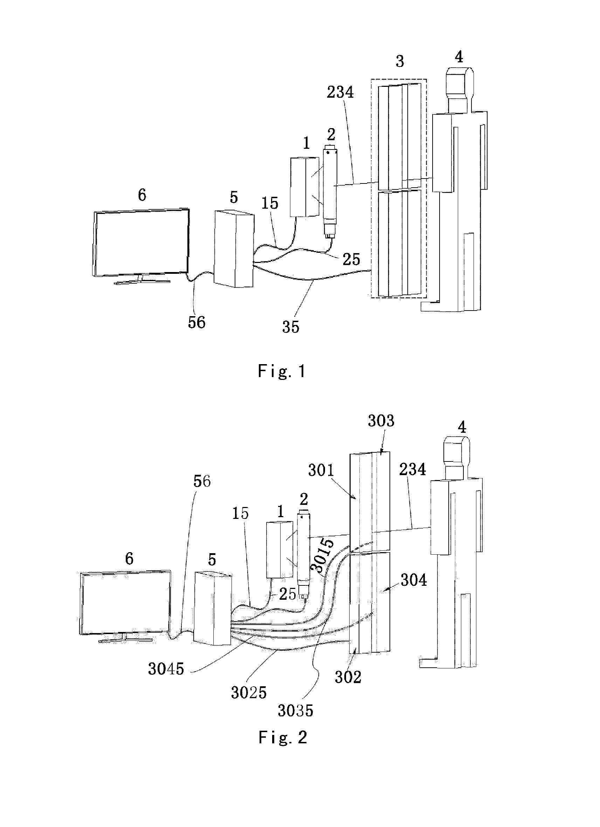

Technical solutions of the present invention will be described hereinafter in more detail by the way of embodiment with reference to figures 2-3 of the attached drawings, wherein the same or like reference numerals refer to the same or like elements throughout the specification. The explanation to the embodiment of the present invention with referring to the accompanying drawings is intended to interpret the general inventive concept of the present invention, rather than being construed as a limiting to the present invention.

Figure 1 illustrates a typical back-scatter human body scanning system in accordance with one embodiment of the present invention. As shown in figure 1, the scanning system includes a ray generator 1 served as a radiation source, a flying spot forming device 2 for modulating radiation rays from the radiation source to form flying spot scanning beams to scan a human body to be detected, a detector 3 to detect radiation rays from the detected human body and output signals charactering doses of the radiation rays, a control and data processing terminal 5 to process the signals outputted by the detector so as to obtain a radiation image of the detected human body, and a display terminal 6 served as a displaying device, such as a LCD display. After being modulated by the flying spot forming device 2, the ray beams emitted from the ray generator 1 form the flying spot ray beams. Then, the flying spot ray beams are incident on the human body 4 to be scanned; and back-scatter occurs at a surface of the scanned human body 4. The rays scattered back are received by the detector 3, which produces an electrical signal and inputs it into the control and data processing terminal 5. After being processed, a scanning image is obtained and displayed on the display terminal 6. It can be seen from figure 1 that the ray generator 1, the flying spot forming device 2, the detector 3 and the display terminal 6 are respectively connected to the control and data processing terminal 5 by transmission circuits 15, 25, 35 and 56, so as to perform the control of the ray generator 1, the flying spot forming device 2, the detector 3 and the display terminal 6 as described above.

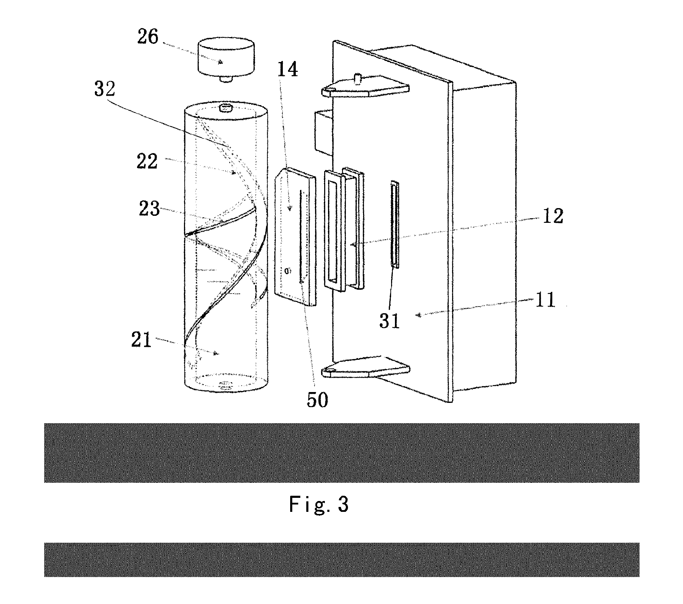

Figures 3-4 illustrate the ray generator 1 and the flying spot forming device 2 in accordance with an embodiment of the present invention. As shown in figure 3, in the above embodiment of the present invention, the ray generator 1 includes an enclosure 11 of the ray generator 1 and a radiation source 13 accommodated within the enclosure 11. In the above structure, the radiation source 13 can be a X-ray machine, a γ ray source or an isotope ray source, and so on. In the above embodiment, the flying spot forming device 2 includes a fixed shield plate 14 and a rotatable shield body 21 respectively disposed between the radiation source 13 and a object 4 to be scanned, wherein the fixed shield plate 14 is stationary with respect to the radiation source 13, and the rotatable shield body 21 is rotatable with respect to the fixed shield plate 14. Further, the fixed shield plate 14 is provided thereon with a ray passing-through region such as a longitudinal gap 50 in the figure 3, which allows for a radiation beam from the radiation source 13 to pass through the fixed shield plate 14. Arranged on the rotatable shield body 21 respectively is a ray incidence region 23, such as a series of discrete pinholes or slits disposed along a spiral line of figure 3, and a ray emergence region 22, such as a series of small discrete holes or slits disposed along the spiral line of the figure 3. During the rotating and scanning operation of the rotatable shield body 21, the ray passing-through region 50 of the fixed shield plate 14 continuously intersects with the ray incidence region 23 and the ray emergence region 22 of the rotatable shield body 21 to generate collimating holes, for scanning. In the above embodiment, the fixed shield plate 14 is disposed between the radiation source 13 and the rotatable shield body 21. Further, as shown in figure 3, the scanning system may include a driving device 26 to drive the rotatable shield body 21 to rotate, for example a speed regulating motor, and the like.

As shown in figures 3-4, the enclosure 11 of the ray generator in one specific embodiment is generally in the shape of a rectangular box, and it is provided with a collimating gap 31 through which radiation rays emitted from the radiation source 13 can emerge out. The radiation beams 40 emitted from a target point P of the radiation source 13 pass through the collimating gap 31 to form a ray sector, and then pass through the passing-through region of the fixed shield plate 14 (for example the longitudinal gap 50 of the figure 3). Further, they pass through the ray incidence region 23 of the rotational shield body 21, such as a series of small discrete holes or slits 32 disposed along a spiral line shown in the figures 3-4, and the ray emergence region 22, such as a series of small discrete holes or slits disposed along a spiral line. By adjusting a relative positional relationship among the longitudinal gap 50 of the fixed shield plate 14 and the ray incidence region 23 and the ray emergence region 22 of the rotatable shield body 21, the ray passing-through region 50 of the fixed shield plate 14 continuously intersects with the small discrete holes or slits in the ray incidence region 23 and the small discrete holes or slits in the ray emergence region 22 of the rotatable shield body 21 during the rotatable scanning of the rotatable shield body 21, thus generating collimating holes for scanning. In other words, the small discrete holes or slits in the ray incidence region 23 and the small discrete holes or slits in the ray emergence region 22 of the rotatable shield body 21 as well as the longitudinal and the narrow gap 50 of the fixed shield plate 14 cooperate together to form a ray collimated hole. Alternatively, as shown in figures 3-4, the small discrete holes 32 and 22 are in a circular, square or ellipse shape, preferably being circular.

As shown in figures 3-4, the ray passing-through region 50 of the fixed shield plate 14 is a rectilinear gap, the rotatable shield body 21 is a cylinder, and the ray incidence region 23 and the ray emergence region 22 are configured to be a series of small discrete holes 32 disposed along a spiral line, respectively. Specifically, referring to figure 2, any one small discrete hole in the ray incidence region 23 and the ray emergence region 22 as shown therein (for example points A and B), performs a uniform circular motion along a cylindrical plane of the rotatable shield body 21, while making a rectilinear motion in accordance with a certain speed distribution along an axial direction of the rotatable shield body 21, thereby generating a certain cylindrical spiral line. In one specific embodiment, any one point in the ray incidence region 23 and the ray emergence region 22 as shown therein (for example points A and B), performs a uniform circular motion along the cylindrical plane of the rotatable shield body 21, while making a uniform rectilinear motion along a radial direction of the rotatable shield body 21, thereby generating a uniform cylindrical spiral line.

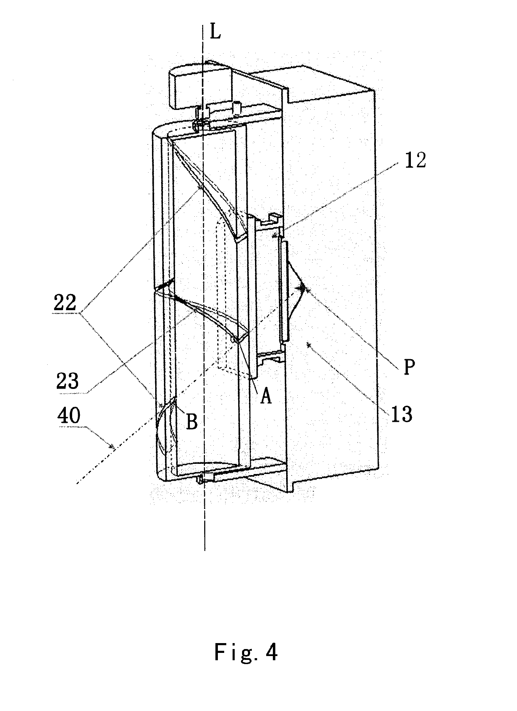

Referring to figure 4, After determining the target point P of the radiation source 13 and the point A of the ray incidence region 23, it is possible to ascertain an emergence point B on the ray emergence region 22 by a radiation beam 40 which is formed by connecting the target point P of the radiation source 13 to the incidence point A of the ray incidence region 23. Since the ray incidence region 23 and the ray emergence region 22 are set in the form of a uniform cylindrical spiral line, when the rotatable shield body 21 uniformly rotates, positions of the ray collimated holes move with the rotation of the rotatable shield body 21, and thus the beams of emergence ray 40 move. As a result the collimating holes for scanning continuously and uniformly move along the rectilinear gap 50.

With reference to the figure 3, the enclosure 11 of the ray generator may be used to ensure shielding the ray by connecting the shield sleeve 12 and the fixed shield plate 14. It can be seen from the above configuration that the radiation source 13 is arranged in the interior of the enclosure 11 of the ray generator, rather than in the interior of the rotatable shield body 21, and the scanning mechanism can be achieved by mating with the shield sleeve 12 as the mechanical interface in a mass-produced X-ray machine. As such, the structure of the scanning device becomes compact, avoiding redesign of the shield body of the X-ray machine, thereby saving the cost thereof.

In the above back-scatter human body security inspection system, in order to collect the signal of the rays scattered back from the scanned human body 4 as much as possible, the back-scatter human body scanning system typically employs the detector 3 having a large area, for example, plastic scintillator detector. In the embodiment shown by figure 1, the detector 3 having a large area as a whole detects the rays scattered back from the surface of the scanned human body 4, so as to generate an electrical signal and send it into the control and data processing terminal 5 through a single transmission circuit 35.

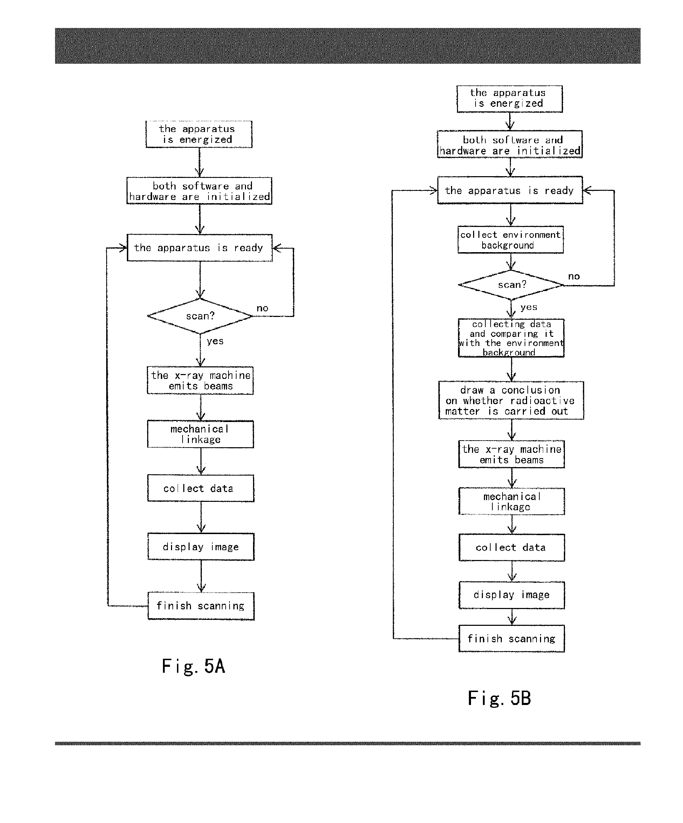

An operation mode of the back-scatter human body security inspection system in accordance with the present invention will be explained below in conjunction with figure 5. Figure 5 is a schematic view showing a workflow of the back-scatter human body security inspection system in accordance with one embodiment of the present invention, wherein figure 5A is a workflow chart of the back-scatter human body security inspection system without performing the detection on the radioactive matter; and figure 5B is a workflow chart of the back-scatter human body security inspection system upon performing the detection on the radioactive matter.

As shown in figure 5A, the apparatus is energized at starting up, and software and hardware are initialized. After the apparatus is at the ready, it is waiting for an instruction to perform back-scatter scanning. If the control system gives out the instruction on performing the back-scatter scanning, then the ray source 13, for example the X-ray machine, emits beams. A pencil-shaped ray beams emitted from the ray generator 1 are modulated by the flying spot forming device 2 to form flying spot ray beams 234, which are incident on the human body 4 to be scanned, so as to perform one dimensional scan along a first direction, for example, a vertical direction of the human body shown in figures 1-2. Meanwhile, a two dimensional scan of the human body is performed by translating or rotating of the flying spot forming device 2 with respect to the human body 4 to be scanned in a direction perpendicular to the first direction scanned by the pencil-shaped ray beams 234 by means of mechanical linkages. And then, back scattering occurs at a surface of the human body 4 to be scanned, and the scattered rays are received by the detector 3. The detector 3 produces an electrical signal thereto and sends it into the control and data processing terminal 5. After processing, the scanning image is obtained and displayed on the display terminal 6, thereby finishing one round of the back-scattering scanning operation.

Figure 5B shows a workflow chart of the back-scatter human body security inspection system upon performing radioactive matter detection. As shown in figure 5B, the operating steps related to the back-scatter scanning thereof are basically identical with those shown by figure 5A, except that it comprises flow steps to perform radioactive matter detection. Specifically, when the ray generator 1 does not emit X-rays and the human body 4 to be detected is absent in front of the apparatus, the detector 3 is placed in a working state to make ray detection. The control and data processing terminal 5 processes the data, and extracts a characteristic value by a predetermined algorithm, as a characteristic value of an environment parameter or background. When the human body 4 to be detected is in front of the apparatus and the ray generator 1 does not emit the X-rays, the detector 3 is arranged in the same working state as the state in which the characteristic value for the environment parameter is measured, to make ray detection. The control and data processing terminal 5 processes data and extracts a characteristic value, as a characteristic value of the human body to be detected. The characteristic value of the human body to be detected is compared with the characteristic value of the environment parameter or background, and if the characteristic value of the human body to be detected reach a certain threshold above the characteristic value of the environment parameter or background, then it will be determined that there is a suspicion that the detected human body 4 carries the radioactive matter.

It is preferred that the characteristic value as described above is an average value on a signal level during a certain period; the number of pulses exceeding a certain level value within a certain period; or a statistic parameter of the average value and the number of pulses, for example standard deviation or the like. Also, the preferred characteristic value can include various combinations of these values or parameters. It should be noted that selection of the characteristic value depends on the chosen algorithm, including but not limited to these characteristic values.

In the step of comparing the characteristic value of the environment parameter with that of the human body to be detected, it includes but not limited to as follows: drawing a conclusion on whether the human body to be detected carries the radioactive matter by a direct comparison; or drawing a conclusion on possibility (probability) that the human body to be detected carries the radioactive matter by a comprehensive comparison on various characteristic values.

Figure 2 illustrates a schematic view of the back-scatter human body security inspection system in accordance with another embodiment of the present invention, wherein it employs a plurality of detectors to detect the radioactive matter carried by the human body. As shown by figure 2, the present back-scatter human body security inspection system which may detect the radioactive matter carried by the human body includes a ray generator 1, a flying spot forming device 2, detectors 3, a control and data processing terminal 5 and a display terminal 6. When the flying spot forming device 2 is rotated in high speed, it can modulate the sector-shaped beams emitted from the X-ray source 1 into a plurality of pencil-shaped beams emitted along the vertical direction at separate times. At each time only a pencil-shaped beam can be emitted through the flying spot forming device 2 onto a small area of a surface on the human body 4 to be scanned. These beams are scattered at the surface of the body, and then are received by the detectors 301, 302, 303, and 304. Accordingly, these detectors produce the electrical signals and send these signals into the control and data processing terminal 5 by separate transmission circuits 3015, 3025, 3035 and 3045. After the signals are processed, a scanning image is obtained and displayed on the display terminal 6.

In one specific embodiment, the detectors 301, 302, 303 and 304 employ plastic scintillators. X-rays can deposit energy into this kind of material and emit a light signal directly proportional to the deposited energy. These light signals can be collected by a photo-electric multiplier and converted into electrical signals which are sent into the data processing computer 5. In this way, the control and data processing terminal 5 will obtain a scattering signal of this particular position on the body surface at this time, which is directly proportional to the deposited energy by the scattered X-rays in this detector. That is, this indicates whether the back-scatter signal is strong or weak. The body surface can be scanned by performing the second dimensional scan through translating or rotating the flying spot forming device 2 with respect to the human body 4 to be scanned though a mechanical linkages in a direction perpendicular to the first direction, in which the pencil-shaped ray beams 234 scan. Thereby, the scattering signals of the whole surface of the body can be obtained, and the combination of them forms a back-scatter image.

As shown by figure 5B, in the case of being integrated with the function of detecting the radioactive material, the sampling and calculation can be performed on the characteristic value of the environment background, when the apparatus is ready and the human body 4 to be scanned is standing up in front of the apparatus. Once the human body 4 to be scanned needs to be inspected, before emitting beams from the X-ray machine, it takes a predetermine period (for example approximately 1 second) to sample the data of the human body 4 to be scanned and calculate the data, thereby obtaining the characteristic value of the human body to be detected. After it is compared with the characteristic value of the environment background, the result is given out and displayed on the interface of the software. Thereafter, the X-ray machine emits beams and subsequent scanning procedures are carried out. In the step of detecting the radioactive material, the detector and the data processing terminal used for sampling the background of the environment are the same as those used for sampling the X-ray back-scatter signal of the human body. Accordingly, since the sensitivity of the detector 3 in the back-scatter system to the rays is utilized in the present invention, the radioactive matter carried by the human body can be detected by altering or adding the scanning flow, data sampling process and algorithms, without adding new hardware.

In the above embodiment, as shown by figure 2, the control and data processing terminal 5 can respectively process different data received by the different detector modules 301, 302, 303, and 304, and obtain several groups of characteristic values, including characteristic value of the environment background and the characteristic value of the human body to be inspected. Throughout algorithm analysis, the conclusion is drawn on whether respective body areas of the human body 4 to be detected have radioactive matter or on the probability that the respective body areas have the radioactive matter.

In the above embodiment, the sampling and calculation can be performed on the characteristic value of the environment background, when the apparatus is ready and the human body 4 to be scanned is standing up in front of the apparatus. And once the human body 4 to be scanned needs to be inspected, before emitting beams from the X-ray machine, it will take a predetermine period (for example approximately 1 second) to sample the data of the human body 4 to be scanned and calculate the data, thereby obtaining the characteristic value of the human body to be detected. But the present invention is not limited to this. The time period for measuring the characteristic value of the environment parameter, and the time period for measuring characteristic value of the human body to be detected, can be flexibly set in accordance with the scanning procedure. On one hand, the time period for measuring the characteristic value of the environment parameter only needs to meet the condition that *the ray generator 1 does not emit X-rays, while the human body 4 to be detected is not in front of the apparatus.* This period includes but not limited to, the period for scanning in case of being absent of human body after starting up the apparatus. On the other hand, the time period for measuring characteristic value of the human body to be detected only needs to meet the condition that *the ray generator 1 does not emit X-rays, while the human body 4 to be detected is in front of the apparatus.* Such period includes but not limited to, the ready period in which the human body to be detected is in front of the apparatus, the period for which the human body to be detected turns out in front of the apparatus, and so on. In other words, the detector 3 in different or separate times detects the radiation rays from the radiation source 1 scattered by the human body 4 to be detected, and the radiation rays from the radioactive matter carried out by the human body 4 to be detected.

Although the preferred embodiment of the present invention is explained with referring to figures 1-5, it should be understood that the above embodiments are not intended to limit the present invention. For example, in place of the rotary cylindrical flying spot forming device as described in the above specific embodiments of the present invention, other kinds flying spot forming devices can also be used, such as rotary wheel flying spot forming device, rotary disc flying spot forming device, and so on. In the preferred embodiment of the present invention, the detector 3 having a large area employs a plastic scintillator detector, but the present is not limited to this. Alternatively, the detector 3 can also employ the inorganic scintillator detectors, such as Csl, BaFCl inorganic scintillator detectors. Although the above embodiments use a symmetric arrangement form of the detector modules 301, 302, 303 and 304 with respect to the human body to be detected, the present invention is not limited to this. For example, the detectors can be arranged in other forms. In addition, the detectors can be stationary, or can be transversely or longitudinally moved by means of mechanical linkages.

Although some embodiments of the general inventive concept are illustrated and explained, it would be appreciated by those skilled in the art that modifications and variations may be made in these embodiments without departing from the principles and spirit of the general inventive concept of the disclosure, the scope of which is defined in the appended claims and their equivalents.

## Claims

1. A back-scatter human body security inspection system, which is capable of detecting a radioactive matter carried by the human body, comprising:
a radiation source configured to generate radiation rays;
a flying spot forming device, configured to modulate the radiation rays from the radiation source, so as to form flying spot scanning beams for scanning the human body to be detected;
a detector configured to detect radiation rays from the human body to be detected and output a signal characterizing a dose of the radiation rays;
a control and data processing device, configured to process the signal outputted from the detector to obtain a radiation image of the human body to be detected,
wherein the detector detects the radiation rays from the radiation source scattered by the human body to be detected, and the radiation rays from the radioactive matter carried by the human body to be detected, separately at different times.

2. The back-scatter human body security inspection system as claimed in claim 1, **characterized in that**:
It further comprises a displaying device configured to display the obtained radiation image of the human body to be detected.

3. The back-scatter human body security inspection system as claimed in claim 1 or 2, **characterized in that**:
the flying spot forming device comprises:
a fixed shield plate and a rotatable shield body disposed between the radiation source and a object to be scanned respectively, wherein the fixed shield plate is stationary with respect to the radiation source and the rotatable shield body is rotatable with respect to the fixed shield plate, wherein:
the fixed shield plate is provided with a ray passing-through region thereon, which allows for a radiation beam from the radiation source to pass through the fixed shield plate,
a ray incidence region and a ray emergence region, arranged on the rotatable shield body respectively, during the rotation scanning of the rotatable shield body, the ray passing-through region of the fixed shield plate continuously intersects with the ray incidence region and the ray emergence region of the rotatable shield body to generate collimating holes for scanning.

4. The back-scatter human body security inspection system as claimed in claim 3, **characterized in that**:
the ray passing-through region of the fixed shield plate is a rectilinear gap,
the rotatable shield body is a cylinder, and the ray incidence and emergence regions are configured to be a series of discrete pinholes or slits disposed along a spiral line respectively.

5. The back-scatter human body security inspection system as claimed in claim 1 or 2, **characterized in that**:
the detector as a whole detects the rays scattered back from a surface of the scanned human body, and produces an electrical signal, which is sent into the control and data processing device by a single transmission circuit and processed therein.

6. The back-scatter human body security inspection system as claimed in claim 1 or 2, **characterized in that**:
the detector comprises a plurality of detecting units, which detect the rays scattered back from a surface of the scanned human body respectively, and produce electrical signals, which are sent into the control and data processing device by respective transmission circuits and processed therein.

7. The back-scatter human body security inspection system as claimed in claim 1 or 2, **characterized in that**:
the radiation source is a X-ray machine, a γ ray source or an isotope ray source; and
the detector is a plastic scintillator detector or an inorganic scintillator detector.

8. A scanning method by a back-scatter human body security inspection system as claimed in any one of claims 1-7, the method includes:
(a) driving the radiation source to emit the radiation ray beams;
(b) modulating the ray beams from the radiation source by the flying spot forming device to form the flying spot ray beams being incident on the scanned human body;
(c) detecting the radiation rays scattered back from the human body to be detected by the detector, producing an electrical signal, inputting it into the control and data processing device and processing it, to obtain a radiation image of the back-scatter ;
(d) detecting the radiation rays from the radioactive matter carried by the human body to be detected by the detector, producing an electrical signal, inputting it into the control and data processing device, and processing it, to obtain a radiation image of the radioactive matter,
wherein the step (c) and the step (d) are performed separately at different times.

9. The scanning method as claimed in claim 8, **characterized in that**: the step (d) comprises:
when the radiation source does not emit the radiation rays and the human body to be detected is absent in front of the inspection system, the detector is placed in a work satae to make ray detection, the control and data processing device processes the data, and extracts a characteristic value by a predetermined algorithm, as a characteristic value of an environment background;
when the radiation source does not emit the radiation rays and the human body to be detected is present in front of the inspection system, the detector is arranged in the same working state as the state in which the characteristic value of the environment background is measured, to make ray detection, the control and data processing device processes data and extracts a characteristic value, as a characteristic value of the human body to be detected;
comparing the characteristic value of the human body to be detected with the characteristic value of the environment background, and if the characteristic value of the human body to be detected reaches a certain threshold above the characteristic value of the environment background, then it will be determined that there is a suspicion that the human body carries the radioactive matter.

10. The scanning method as claimed in claim 9, **characterized in that**:
the said characteristic values of the human body to be detected and the background of the environment are an average value on a signal level during a certain period; the number of pulses exceeding a certain level value within a certain period; a statistic parameter of the average value and the number of pulses, or various combinations of the values and the statistic parameter.

11. The scanning method as claimed in claim 9 or 10, **characterized in that**:
in the comparing step, it further comprises:
drawing a conclusion on whether the human body to be detected carries the radioactive matter by a direct comparison; or
drawing a conclusion on the probability that the human body to be detected carries the radioactive matter by a comprehensive comparison on various characteristic values.

12. The scanning method as claimed in claim 11, **characterized in that**:
the detector as a whole detects the rays scattered back from a surface of the scanned human body, and produces an electrical signal, which is sent into the control and data processing device by a single transmission circuit and processed therein.

13. The scanning method as claimed in claim 11, **characterized in that**:
the detector comprises a plurality of detecting units, which detect the rays scattered back from a surface of the scanned human body respectively, and produce electrical signals, which are sent into the control and data processing device by the respective transmission circuits and processed therein.

14. The scanning method as claimed in claim 13, **characterized in that**, it further comprises:
determining whether various areas of the human body to be detected have the radioactive matter or the probability that various areas of the human body to be detected have the radioactive matter, based on the outputted values detected by the detecting units.

15. The scanning method as claimed in claim 13, **characterized in that**:
after the starting up of the inspection system, the operation of measuring the characteristic value of the environment background is performed within a duration in which no objects are not scanned; and/or
the operation of measuring the characteristic value of the human body to be detected is performed within a ready period when the human body to be detected is in front of the inspection system, or within a period in which the human body to be detected turns out in front of the apparatus.
